# EUROPEAN PATENT SPECIFICATION

(11) **EP 2 620 825 B1**
(45) Date of publication and mention of the grant of the patent: **10.08.2016**
(21) Application number: 13151388.9
(22) Date of filing: 16.01.2013
(51) Int. Cl.: G05B 19/402, B23Q 15/22

(54) **Positioning system on a piece-holder table of a machine tool and method of positioning the piece on the table**
Positionierungssystem auf einem Werkstückhaltertisch eines Maschinenwerkzeugs und Verfahren zur Positionierung des Werkstücks auf einem Tisch
Système de positionnement sur une table de porte-pièces d'une machine outil et procédé de positionnement de la pièce sur la table

(30) Priority: 26.01.2012 IT BS20120010
(43) Date of publication of application: 31.07.2013
(73) Proprietor: INNSE-BERARDI S.p.A., 25127 Brescia (IT)
(72) Inventor: Boifava, Roberto, I-25127 Brescia (IT); Zucchini, Stefano, I-25127 Brescia (IT)
(74) Representative: Pulieri, Gianluca Antonio

(56) References cited:
- WO-A1-2011/161534
- GB-A- 2 092 924
- GB-A- 2 316 536
- JP-A- 2011 140 098

## Description

The present invention relates to a positioning system of a mechanical piece to be worked on a piece-holder table of a machine tool and a method of positioning the piece to be worked on the table.

In particular, the present invention relates to a positioning system of a mechanical piece of large dimensions and considerable weight, for example weighing several tens of tonnes, on a piece holder table of a machine tool of large dimensions, such as a boring machine or milling-boring machine.

A mechanical piece of large dimensions is usually positioned on the piece holder table of the machine tool using hoisting means such as an overhead crane positioning systems known are shown, for example, in documents GB2316536A and WO2011/161534A1.

The correct positioning of the piece on the table is of fundamental importance for achieving the required tolerances at the end of machining, on account of the significant weight of the piece itself. In fact, if the piece is not properly positioned on the table, this will give way and undergo deformations not correctable by the action of the support means of the table, for example hydrostatic.

The purpose of the present invention is to make a positioning system of a mechanical piece on a piece-holder table of a machine tool and a method of positioning thereof.

Such purpose is achieved by a positioning system according to claim 1. The positioning method is performed according to claim 10.

The characteristics and advantages of the positioning system and positioning method according to the present invention will be evident from the description given below, made by way of a non-limiting example, according to the appended drawings:

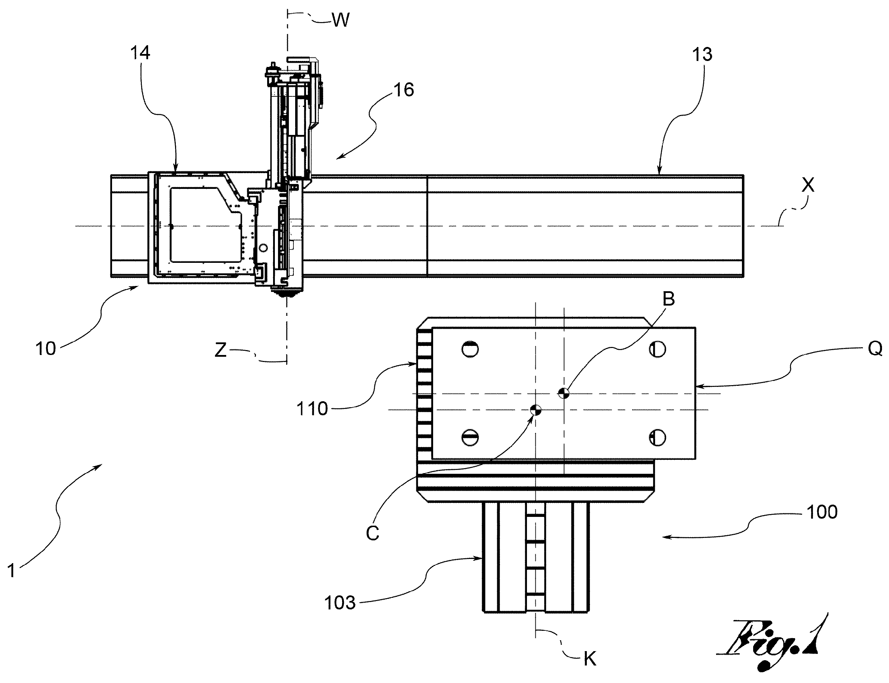

- figure 1 shows a group comprising a machine tool and a piece holder table according to one embodiment of the present invention, in a ground view from above;

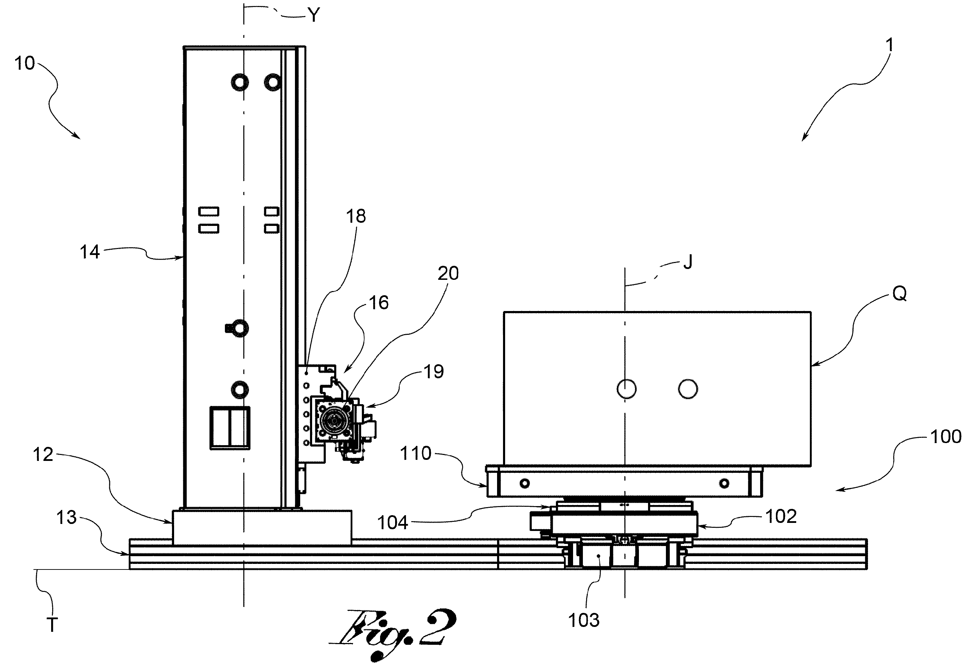

- figure 2 shows the group in figure 1 according to a front view;

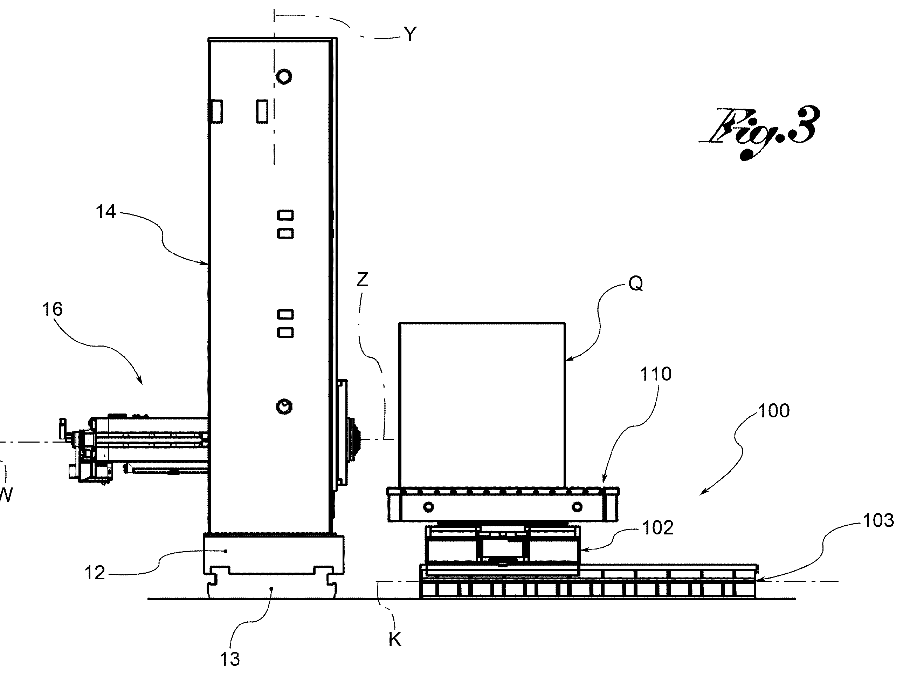

- figure 3 shows the group in figure 1 according to a side view;

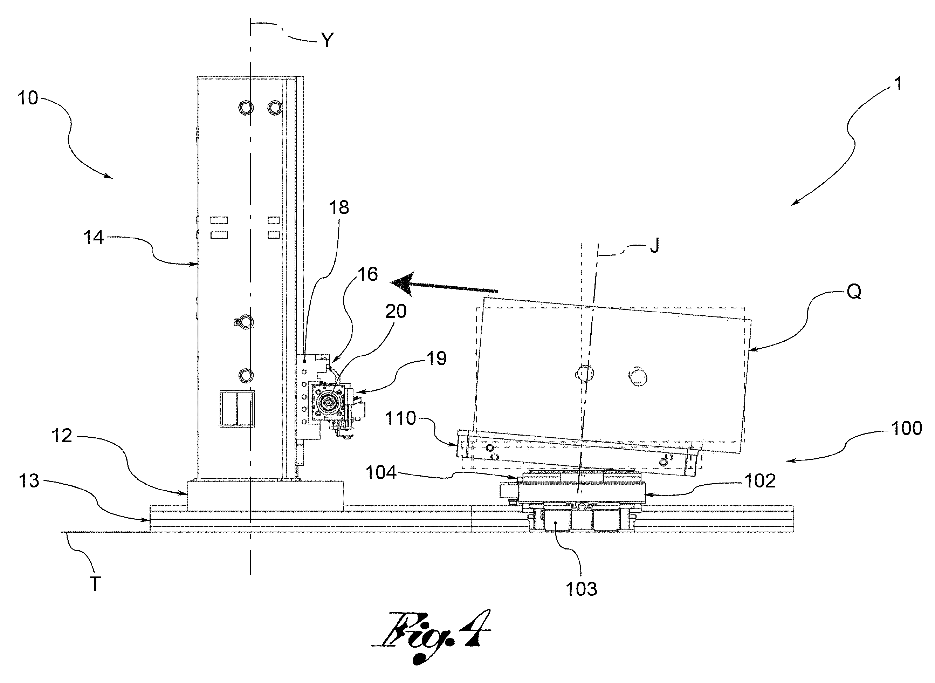

- figure 4 shows the group in figure 3 in which a badly positioned mechanical part is schematised;

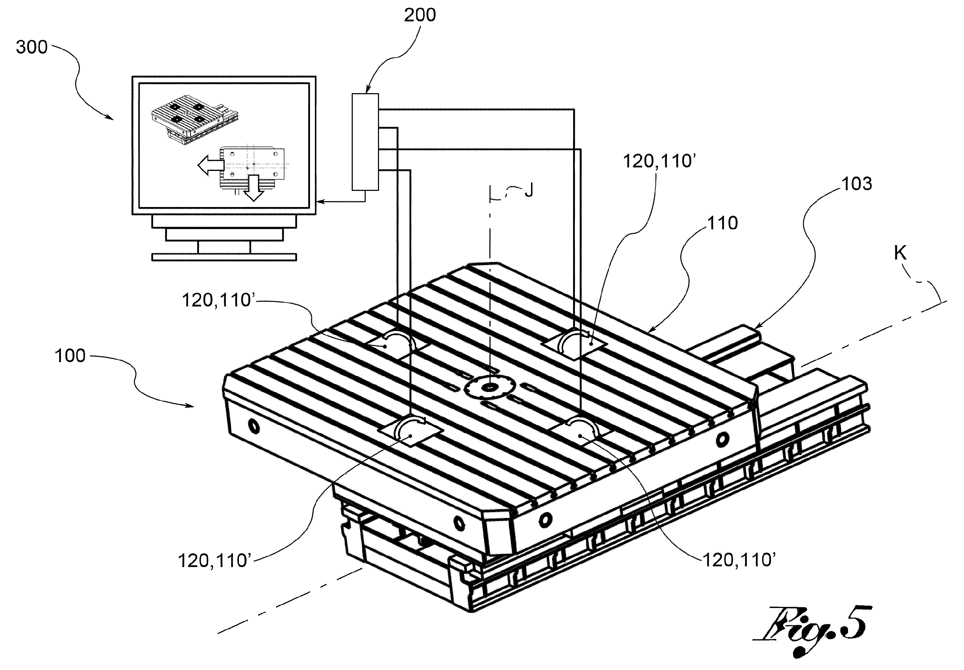

- figure 5 shows a diagram of a positioning system according to one embodiment of the present invention.

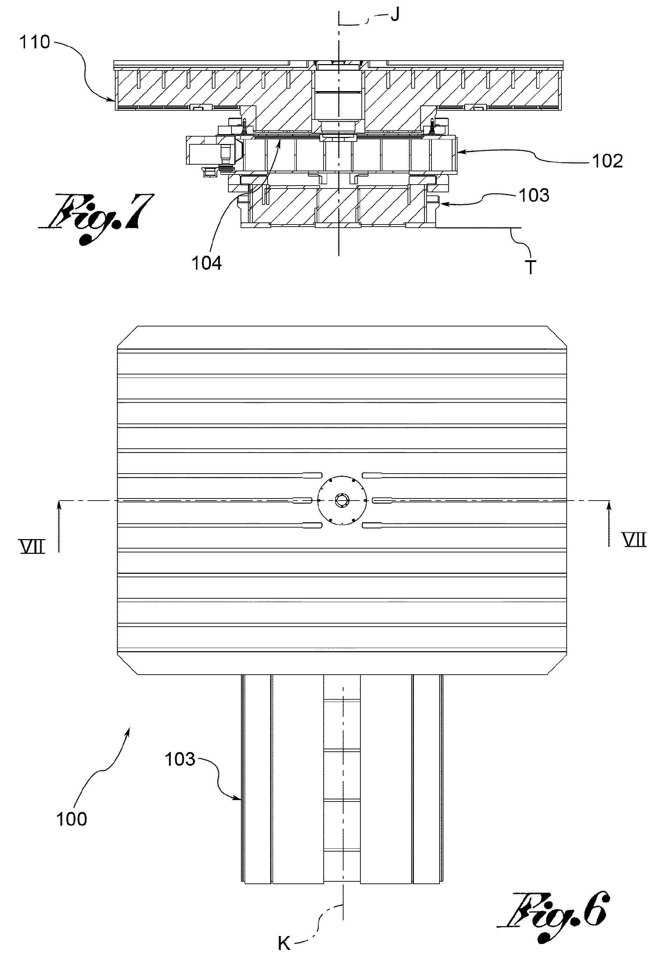

- figure 6 shows the piece-holder table of the system according to the present invention;
- figure 7 shows a cross-section view of the piece-holder table , according to the cross-section line VII-VII in figure 6; and

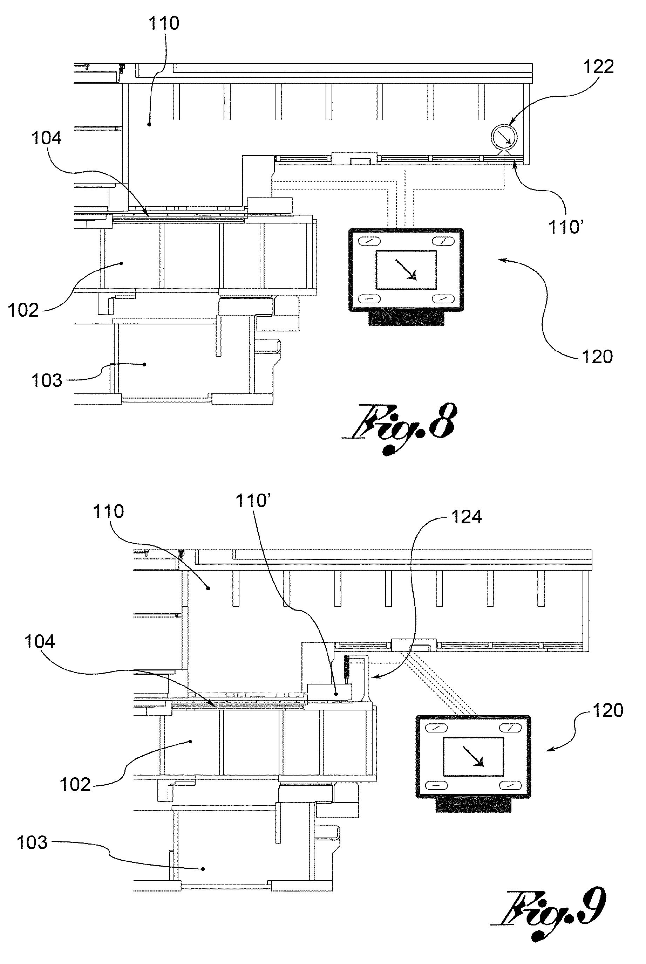

- figures 8 and 9 show embodiment diagrams of the system according to the present invention.

With reference to the appended drawings, reference numeral 1 globally denotes a group for performing mechanical machining, comprising a machine tool 10 and a piece holder support device 100 for the support of a piece Q, such as a piece of large dimensions and considerable weight.

According to one embodiment, the machine tool 10, for example a horizontal boring-milling machine, comprises a base 12, resting on a bench 13, in turn, resting on the ground T.

Above the base 12 a vertical upright 14 extends along a vertical axis Y, substantially orthogonal to the ground plane T.

The machine 1 comprises a mobile group 16 supported by the upright 14; the mobile group 16 comprises a carriage 18, sliding upon command along the upright 14, so as to position itself at a desired height along the vertical axis Y, and a head 19, supported by the carriage 18, translating along the head axis W orthogonal to the vertical axis Y, that is to say substantially horizontal.

In addition, the mobile group 16 comprises a least one mandrel 20, supported by the head 19, rotatable around a working axis Z, also substantially perpendicular to the vertical axis Y and preferably also translatable along said working axis Z.

Perpendicular to the vertical axis Y and the working axis Z, a longitudinal axis X is defined, along which the bench 13 extends.

Opposite the mandrel 20 the piece to be worked Q is positioned, supported by the support device 100.

The support device 100 comprises a support bench 103, for example having an extension along a translation axis K, preferably orthogonal to the longitudinal axis X of the bench 13 of the machine tool, and a support base 102, supported by the bench support 103 and translatable upon command along it.

In addition, preferably, the piece holder device 100 comprises a thrust bearing 104, positioned on the support base 102 and supported by means of support, preferably hydrostatic, suitable for rotating on command around a rotation axis J orthogonal to the ground plane T.

In addition, the support device 100 comprises a table plate 110 positioned on the thrust bearing 104, suitable for supporting the piece Q.

The table plate 110 is therefore preferably roto-translating, for example moved in translation by the support base 102 and in rotation by the thrust bearing 104.

Furthermore, the group 1 comprises means of raising and repositioning suitable for raising the piece Q from the table plate and repositioning it thereon. For example, said raising and repositioning means are motorised and comprise an overhead crane.

preferably, the support device 100 comprises at least one sensor 120 applied to a control portion 110' of the table plate, said sensor being suitable for detecting the variation of position or disposition of said control portion 110' in relation to a reference.

For example, said sensor 120 comprises an inclinometer 122 or said sensor is a position or shift sensor, of the non contact (proximeter) or contact type (such as a linear touching sensor type LVDT).

For example, the inclinometer is suitable for detecting the inclination of the control portion 110' in relation to the reference, for example to the horizontal plane or to the bench 103.

Preferably, the support device comprises at least two sensors 120, preferably positioned in diametrically opposite positions to the rotation axis J of the table plate 110.

According to a preferred embodiment, the support device 100 comprises four sensors 120, for example four inclinometers, positioned in diametrically opposite positions to the rotation axis J of the table plate.

For example, said sensors are positioned inside the imaginary diameter defined by the thrust bearing 104.

In addition, the group 1 comprises a processing unit 200, for example comprising a CPU of a computer, operatively connected to the sensors 120 to acquire measurement information, performing processing of said measurement information, obtaining shift information and transforming said shift information to an operator.

For example, the group 1 further comprises a visualisation unit 300, such as a computer monitor, operatively connected to the processing unit 200 for the visualisation of said shift information.

The positioning method according to the present invention involves the following steps.

In a preliminary step, for the piece Q item information is defined, related to the geometry or distribution of the masses of the piece Q to be worked; for example said item information consists of the co-ordinates of a barycentre B of the piece Q, identified for example by CAD processing of the piece; the item information, that is the co-ordinates of the barycentre B of the piece Q, are acquired by the processing unit 200, for example manually by the intervention of an operator.

In a further preliminary step, target information is acquired by the processing unit 200, for example manually or by informatics means by the intervention of an operator said target information is relative to the target to be reached by correct positioning of the piece on the piece holder table.

For example, said target information is relative to the tolerances to be achieved for the machining to be performed. Or, said target information consists of the co-ordinates of the barycentre C of the piece-holder table. Or, said target information consists of the co-ordinates of an area of the piece holder plate which the barycentre of the piece Q should fall within.

In a subsequent step, the piece Q is raised and carried onto the table plate 110, for example using an overhead crane; while the piece Q is lowered the relative workers, pushing or pulling the piece manually, try to rest it on the table plate in an optimal manner, for example so that the barycentre B of the piece is as close as possible to the barycentre C of the table plate.

After the first positioning, the processing unit 200 acquires the measurement information of the sensors 120.

The processing unit 200, on the basis of the item information relative to the piece Q, of the target information , of the measuring information coming from the sensors 120, and of any surrounding conditions, calculates shift information corresponding to the shift to be performed by the piece Q to converge the item information with the target information.

For example, the processing unit 200, on the basis of the co-ordinates of the barycentre B of the piece Q (item information),of the co-ordinates of the barycentre C of the table plate (target information), of the measuring information coming from the sensors 120, and of the calculated or experimental rigidity (surrounding conditions) of the support device , calculates shift information corresponding to the shift to be performed by the piece Q to converge the barycentre B of the piece with the barycentre C of the table plate.

Innovatively, the positioning system according to the present invention and the method thereof makes it possible to position a piece to be worked, even of large dimensions, in an excellent and very fast manner.

It is clear that a person skilled in the art may make modifications to the system and method described above so as to satisfy contingent requirements.

For example, according to an implementation variation of the method the further step of defining new item information, for example related to the new geometry or new distribution of the masses recurring in the piece Q following a machining, for example for the removal of material.

For example, said new item information consists of the new co-ordinates of a barycentre of the piece, identified for example by CAD processing of the piece worked, for example following boring.

After acquiring the new item information, the processing unit, on the basis of the new item information relative to the piece Q, of the target information, of the measuring information coming from the sensors 120, and of any surrounding conditions, calculates shift information corresponding to the shift to be performed by the piece Q to converge the new item information with the target information.

Such variants are also contained within the sphere of protection as defined by the following claims.

## Claims

1. Positioning system of a mechanical piece (Q) to be worked, comprising:
- a support device (100) suitable for supporting the piece (Q), said support device being provided with at least one sensor (120) applied to a control portion (110') of said support device (100), wherein the sensor (120) is suitable for measuring measurement information relative to the position or to the disposition of the control portion (110') in relation to a reference;
- a processing unit (200) operatively connected to said sensors (120), suitable for acquiring the measurement information, performing processing of said measurement information, obtaining shift information, which corresponds to the shift to be performed by the piece (Q) to converge the item information with the target information;
- a visualisation unit (300) operatively connected to the processing unit (200) for the visualisation of said shift information;
- means of raising and shifting suitable for raising and shifting said piece (Q);
the positioning system being **characterized by** the fact that said sensor comprises an inclinometer.

2. System according to claim 1, wherein said sensor is a position or shift sensor, of the contact or non contact type.

3. System according to any of the previous claims, wherein the support device (100) comprises a table plate (110) rotating on command around a rotation axis (J).

4. System according to claim 3, wherein the sensor (120) is applied to the table plate (110).

5. System according to any of the previous claims, wherein at least two sensors are provided.

6. System according to any of the claims from 3 to 5, wherein the table plate is translatable upon command along a translation axis (K).

7. System according to any of the previous claims, wherein the raising and shifting means are motorised.

8. Apparatus comprising:
- a machine tool (10);
- a positioning system made according to any of the previous claims.

9. Apparatus according to claim 8, wherein the machine tool (10), such as a horizontal milling-boring machine, comprises a base (12) translatable upon command along a longitudinal axis (X), an upright (14) supported by the base (12)and a mobile group (16) supported by the upright (14), comprising a carriage (18), sliding upon command along the upright (14).

10. Method of positioning a piece (Q) to be worked, comprising:
- a preliminary step in which item information, related to the geometry or distribution of the masses of the piece, is defined for the piece (Q);
- a further preliminary step in which target information relative to the target to be reached by correct positioning of the piece on the piece holder table is defined;
- an initial positioning step of the piece (Q) on the piece-holder device (100);
- a step of acquiring measurement information from sensors (120) of the piece holder device (100) relative to the position or to the disposition of a control portion (110') of the piece holder device (100) in relation to a reference;
- a processing step of the measurement information, of the item information and of the target information to obtain a shift information, which corresponds to the shift to be performed by the piece (Q) to converge the item information with the target information;
- a step of shifting the piece (Q) according to the shift information, the method being **characterized by** the fact that the item information consists of the barycentre (B) of the piece (Q), and
the target information consists of a barycentre (C) of the piece-holder table (110).

11. Method according to claim 10, wherein the initial positioning step is performed by means of an overhead crane.

12. Method according to any of the claims from 10 to 11, wherein the step of shifting the piece according to the shift information is performed by means of an overhead crane.

13. Method according to any of the claims from 10 to 12, wherein the further step of defining new item information is envisaged.

## Patentansprüche

1. Positionierungssystem eines zu bearbeitenden mechanischen Teils (Q), umfassend:
- eine Trägervorrichtung (100), die zum Stützen des Teils (Q) geeignet ist, wobei die Trägervorrichtung mit mindestens einem Sensor (120) ausgestattet ist, der auf einen Steuerabschnitt (110') der Trägervorrichtung (100) angewandt wird, wobei der Sensor (120) zur Messung von Messinformationen bezogen auf die Position oder die Anordnung des Steuerabschnitts (110') in Bezug auf eine Referenz geeignet ist,
- eine Verarbeitungseinheit (200), die funktionell mit den Sensoren (120) verbunden ist und zum Erfassen der Messinformationen, zum Durchführen einer Verarbeitung der Messinformationen, zum Erhalten von Verschiebungsinformationen, die der durch das Teil (Q) auszuführenden Verschiebung entsprechen, so dass sich die Gegenstandsinformationen den Zielinformationen annähern, geeignet ist,
- eine Visualisierungseinheit (300), die funktionell mit der Verarbeitungseinheit (200) zur Visualisierung der Verschiebungsinformationen verbunden ist,
- Mittel zum Anheben und Verschieben, die zum Anheben und Verschieben des Teils (Q) geeignet sind,
wobei das Positionierungssystem durch die Tatsache gekennzeichnet ist, dass der Sensor einen Neigungsmesser umfasst.

2. System nach Anspruch 1, bei dem der Sensor ein Positions- oder Verschiebungssensor des Kontakttyps oder kontaktlosen Typs ist.

3. System nach einem der vorhergehenden Ansprüche, bei dem die Trägervorrichtung (100) eine Tischplatte (110) umfasst, die sich gemäß einer Anweisung um eine Drehachse (J) dreht.

4. System nach Anspruch 3, bei dem der Sensor (120) auf die Tischplatte (110) angewandt wird.

5. System nach einem der vorhergehenden Ansprüche, bei dem mindestens zwei Sensoren bereitgestellt sind.

6. System nach einem der Ansprüche 3 bis 5, bei dem die Tischplatte gemäß einer Anweisung entlang einer Verschiebungsachse (K) verschiebbar ist.

7. System nach einem der vorhergehenden Ansprüche, bei dem die Anhebe- und Verschiebemittel motorisiert sind.

8. Vorrichtung, umfassend:
- eine Werkzeugmaschine (10),
- ein Positionierungssystem, das gemäß einem der vorhergehenden Ansprüche hergestellt ist.

9. Vorrichtung nach Anspruch 8, bei der die Werkzeugmaschine (10), wie beispielsweise eine horizontale Fräs-Bohr-Maschine, eine Basis (12), die gemäß einer Anweisung entlang einer Längsachse (X) verschiebbar ist, einen Ständer (14), der durch die Basis (12) gestützt ist, und eine mobile Gruppe (16) umfasst, die durch den Ständer (14) gestützt wird und einen Schlitten (18) umfasst, der gemäß einer Anweisung entlang des Ständers (14) gleitet.

10. Verfahren zum Positionieren eines zu bearbeitenden Teils (Q), umfassend:
- einen vorbereitenden Schritt, in dem Gegenstandsinformationen, welche die Geometrie oder die Verteilung der Massen des Teils betreffen, für das Teil (Q) definiert werden,
- einen weiteren vorbereitenden Schritt, in dem Zielinformationen in Bezug auf das Ziel definiert werden, das durch eine korrekte Positionierung des Teils auf dem Teilhaltetisch erreicht werden soll,
- einen anfänglichen Positionierungsschritt des Teils (Q) auf der Teilhaltevorrichtung (100),
- einen Schritt des Erfassens von Messinformationen von Sensoren (120) der Teilhaltevorrichtung in Bezug auf die Position oder die Anordnung eines Steuerabschnitts (110') der Teilhaltevorrichtung (100) in Bezug auf eine Referenz,
- einen Verarbeitungsschritt der Messinformationen, der Gegenstandsinformationen und der Zielinformationen zum Erhalten von Verschiebungsinformationen, die der mit dem Teil (Q) durchzuführenden Verschiebung entsprechen, so dass die Gegenstandsinformationen den Zielinformationen angenähert werden,
- einen Schritt des Verschiebens des Teils (Q) gemäß der Verschiebungsinformationen,
wobei das Verfahren durch die Tatsache gekennzeichnet ist, dass die Gegenstands-informationen aus dem Schwerpunkt (B) des Teils (Q) bestehen, und
die Zielinformationen aus einem Schwerpunkt (C) des Teilhaltetischs (110) bestehen.

11. Verfahren nach Anspruch 10, bei dem der anfängliche Positionierungsschritt mittels eines Brücken- oder Hängekrans durchgeführt wird.

12. Verfahren nach einem der Ansprüche 10 bis 11, bei dem der Schritt des Verschiebens des Teils gemäß der Verschiebungsinformationen mittels eines Brücken- oder Hängekrans durchgeführt wird.

13. Verfahren nach einem der Ansprüche 10 bis 12, bei dem der weitere Schritt des Definierens von neuen Gegenstandsinformationen vorgesehen ist.

## Revendications

1. Système de positionnement d'une pièce mécanique (Q) à usiner, comprenant :
- un dispositif de support (100) adapté pour supporter la pièce (Q), ledit dispositif de support étant doté d'au moins un capteur (120) appliqué à une partie de commande (110') dudit dispositif de support (100), dans lequel le capteur (120) est adapté pour mesurer des informations de mesure relatives à la position ou à la disposition de la partie de commande (110') par rapport à une référence ;
- une unité de traitement (200) reliée en fonctionnement auxdits capteurs (120), adaptée pour acquérir les informations de mesure, réaliser le traitement desdites informations de mesure, obtenir des informations de décalage qui correspondent au décalage à réaliser par la pièce (Q) pour faire converger les informations sur l'article avec les informations cibles ;
- une unité de visualisation (300) reliée en fonctionnement à l'unité de traitement (200) pour la visualisation desdites informations de décalage ;
- des moyens de levage et de décalage adaptés pour lever et décaler ladite pièce (Q) ;
le système de positionnement étant **caractérisé par le fait que** ledit capteur comprend un inclinomètre.

2. Système selon la revendication 1, dans lequel ledit capteur est un capteur de position ou de décalage du type avec et sans contact.

3. Système selon l'une quelconque des revendications précédentes, dans lequel le dispositif de support (100) comprend une plaque de table (110) pour la rotation sur commande autour d'un axe de rotation (J).

4. Système selon la revendication 3, dans lequel le capteur (120) est appliqué sur la plaque de table (110).

5. Système selon l'une quelconque des revendications précédentes, dans lequel au moins deux capteurs sont prévus.

6. Système selon l'une quelconque des revendications 3 à 5, dans lequel la plaque de table est translatable sur commande le long d'un axe de translation (K).

7. Système selon l'une quelconque des revendications précédentes, dans lequel les moyens de levage et de décalage sont motorisés.

8. Appareil comprenant :
- une machine-outil (10) ;
- un système de positionnement réalisé selon l'une quelconque des revendications précédentes.

9. Appareil selon la revendication 8, dans lequel la machine-outil (10), telle qu'une machine de fraisage et d'alésage horizontale, comprend une base (12) translatable sur commande le long d'un axe longitudinal (X), un montant (14) supporté par la base (12) et un groupe mobile (16) supporté par le montant (14), comprenant un chariot (18), coulissant sur commande le long du montant (14).

10. Procédé de positionnement d'une pièce (Q) à usiner, comprenant :
- une étape préliminaire, dans laquelle des informations sur l'article liées à la géométrie ou à la distribution des masses de la pièce, sont définies pour la pièce (Q) ;
- une autre étape préliminaire, dans laquelle des informations cibles liées à la cible à atteindre par le bon positionnement de la pièce sur la table porte-pièce, sont définies ;
- une étape de positionnement initiale de la pièce (Q) sur le dispositif porte-pièce (100) ;
- une étape d'acquisition d'informations de mesure provenant de capteurs (120) du dispositif porte-pièce (100) liées à la position ou à la disposition d'une partie de commande (110') du dispositif porte-pièce (100) par rapport à une référence ;
- une étape de traitement des informations de mesure, des informations sur l'article et des informations cibles pour obtenir des informations de décalage qui correspondent au décalage à réaliser par la pièce (Q) pour faire converger les informations sur l'article avec les informations cibles ;
- une étape de décalage de la pièce (Q) selon les informations de décalage ;
le procédé étant **caractérisé par le fait que** les informations sur l'article se composent du barycentre (B) de la pièce (Q) et
les informations cibles se composent d'un barycentre (C) de la table porte-pièce (110).

11. Procédé selon la revendication 10, dans lequel l'étape de positionnement initiale est réalisée à l'aide d'un pont roulant suspendu.

12. Procédé selon l'une quelconque des revendications 10 à 11, dans lequel l'étape de décalage de la pièce selon les informations de décalage est réalisée à l'aide d'un pont roulant suspendu.

13. Procédé selon l'une quelconque des revendications 10 à 12, dans lequel l'autre étape de définition de nouvelles informations sur l'article est envisagée.
